Europäisches Patentamt

(19) European Patent Office

Office européen des brevets

(11) Numéro de publication: **0 028 168**
**B1**

(12) **FASCICULE DE BREVET EUROPEEN**

(45) Date de publication du fascicule du brevet:
04.05.83

(21) Numéro de dépôt: 80401289.6

(22) Date de dépôt: 10.09.80

(51) Int. Cl.³: **G 01 N 27/70**

(54) Dispositif de mesure de la teneur en oxygène des gaz de combustion.

(30) Priorité: 10.10.79 FR 7925175

(43) Date de publication de la demande:
06.05.81 Bulletin 81/18

(45) Mention de la délivrance du brevet:
04.05.83 Bulletin 83/18

(84) Etats contractants désignés:
**DE GB IT SE**

(56) Documents cités:
**EP-A-0 006 980
FR-A-1 239 563
FR-A-2 424 532
GE-A-895 602
US-A-3 540 851
US-A-3 936 280**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Lombard, Claude, 60, rue Corneille,
F-78150 Le Chesnay (FR)**

㊹ . Mandataire: **Jacques, Max et al, RNUR - S. 0804 BP 103,
F-92109 Boulogne Billancourt (FR)**

BUNDESDRUCKEREI BERLIN

Dispositif de mesure de la teneur en oxygène des gaz de combustion

La présente invention est relative à un dispositif de mesure de la teneur en oxygène des gaz de combustion. D'une manière plus particulière elle est relative à un dispositif de mesure de la teneur en oxygène des gaz de combustion à l'échappement d'un moteur à combustion interne, dispositif susceptible par conséquent de se substituer avantageusement à une sonde. Le dispositif suivant l'invention peut encore être disposé en sortie d'une chaudière d'une quelconque nature en vue d'en régulariser et/ou d'en automatiser le fonctionnement.

Il est connu d'utiliser la différence de potentiel d'ionisation entre l'oxygène et les autres gaz de l'air, notamment l'azote, pour faire des mesures de teneur en oxygène, notamment dans les gaz de combustion. En choisissant une valeur intermédiaire pour le potentiel appliqué à des électrodes définissant un parcours d'ionisation, on peut recueillir entre les électrodes un courant dépendant de la teneur en oxygène. Malheureusement ce courant dépend plus de la température et de l'humidité que de la teneur en oxygène.

La demande de brevet européen autirieure EP-A-0 006 980 décrit une sonde que pallie cet inconvénient au moyen d'un montage différentiel dans lequel de l'air normal est envoyé entre un système d'électrodes et l'air à analyser dans un autre système. Toutefois, la réalisation d'une telle sonde est délicate si l'on veut équilibrer la température et le taux d'humidité, équilibrage sans lequel le montage différentiel a peu d'intérêt.

La présente invention a pour but de réaliser un dispositif de mesure de la teneur en oxygène n'ayant pas les inconvénients précédents, notamment en ce qui concerne l'effet de la température et de l'humidité. La solution à ce problème est indiquée dans la revendication 1. Le dispositif comprend des moyens d'ionisations des gaz et des moyens de mesure des courants ou des potentiels d'ionisation des gaz et un moyen permettant de produire un champ magnétique de déflexion du trajet des molécules d'oxygène. Celui-ci a en effet une légère susceptibilité magnétique, déjà utilisées depuis une vingtaine d'années dans des analyseurs basés sur des principes autres que ceux de la présente invention, et notamment la mesure différentielle de pression. La combinaison de l'ionisation et du champ magnétique permet d'obtenir le but visé de deux manières que ne diffèrent que par le nombre et la disposition des électrodes.

La première consiste à appliquer périodiquement le champ magnétique déviateur ce qui fait passer entre les électrodes de mesure ionique tantôt des gaz normaux, tantôt des gaz enrichis en oxygène.

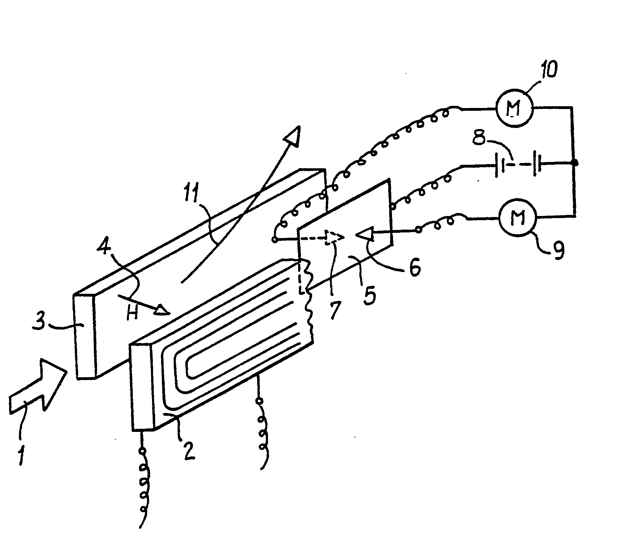

La deuxième consiste en laissant le champ magnétique constant à séparer le canal de circulation des gaz en deux zones l'une enrichie en oxygène, et l'autre appauvrie ou normale, chacune des zones ayant sa propre mesure de courant ou de potentiel d'ionisation qui est alors comparée à l'autre. Cette méthode permet d'utiliser des aimants permanents pour la production du champ quoique la première puisse aussi utiliser des aimants si ceux-ci sont mobiles et notamment tournants. La figure jointe représente une dispositions possible, non limitative de la portée de l'invention. Elle correspond à la deuxième manière dans laquelle le champ magnétique est permanent. Elle n'est donnée qu'à titre d'exemple de réalisation.

Le courant de gaz arrive en 1 et passe entre deux plaques 2 et 3 créant entre elles un champ magnétique H suivant la flèche 4. Ces plaques 2 et 3 sont des aimants à grand champ coercitif, des bobines plates d'électroaimants ou toute autre disposition équivalente. A l'extrémité opposée à la flèche 1 se trouve une électrode centrale 5 séparant en deux le chemin des gaz.

De part et d'autre de l'électrode centrale 5 et à une distance raisonnable de celle-ci sont deux électrodes 6 et 7 dont la forme permet une émission facile d'ions quand la plaque centrale est portée à un potentiel supérieur à celui de l'ionisation de l'oxygène. Les électrodes 6 et 7 sont à titre d'exemple une ou plusieurs pointes fines, un fil tendu parallèlement à la plaque 5 etc.

Les électrodes 5, 6, 7 sont reliées à au moins une source de potentiel 8 et à au moins deux moyens de mesure 9 et 10 de courant ou de potentiel. Les molécules d'oxygène attirées par le champ magnétique sont déviées vers l'une des plaques 2 ou 3 et changent donc partiellement les conditions d'ionisation entre l'une des électrodes 6 ou 7 et l'électrode centrale 5. La dissymétrie entre les charges recueillies respectivement par les électrodes 6 et 7 est d'autant plus élevée que la teneur en oxygène des gaz brûlés parvenant à l'entrée 1 est plus grande.

Les particules ionisées que pourrait contenir l'arrivée de gaz en 1 sont défléchies suivant la flèche 11 ou sont symétriques et ne perturbent donc pas la mesure.

Dans le cas où les électrodes 2 et 3 sont des électroaimants, il est à la portée du technicien de régler leur alimentation en courant électrique de façon à réaliser une modification ou une interruption périodique du champ magnétique par l'intermédiaire d'une base de temps et/ou d'un circuit de commutation approprié.

**Revendications**

1. Dispositif de mesure de la teneur en oxygène des gaz de combustion circulant dans une zone, lequel dispositif comporte des moyens d'ionisation (5—8) des gaz et des moyens de mesure (9, 10) du courant ou du potentiel d'ionisation, caractérisé en ce qu'il comporte des moyens (2, 3) produisant un champ magnétique (H, 4) de déflexion du trajet des molécules d'oxygène, les moyens d'ionisation (5, 6, 7, 8) étant disposés dans ledit trajet des molécules d'oxygène déviées.

2. Dispositif de mesure suivant la revendication 1, caractérisé en ce qu'il comprend des moyens de modification ou d'interruption périodique du champ magnétique régnant entre les pôles des moyens (2, 3) produisant ledit champ magnétique.

3. Dispositif de mesure suivant la revendication 1 ou 2, caractérisé en ce qu'il comprend un élément (5) de séparation des gaz en deux zones, dont l'une est enrichie en oxygène et l'autre appauvrie ou sans modification par l'intermédiaire des moyens (2, 3) produisant le champ magnétique, et des moyens d'ionisation (5—8) ainsi que des moyens de mesure du courant ou du potentiel d'ionisation des gaz dans chacune des zones.

### Patentansprüche

1. Vorrichtung zur Messung des Sauerstoffgehaltes von in einem Bereich zirkulierender Verbrennungsgase, wobei die Vorrichtung eine Ionisationsanordnung (5—8) für die Gase aufweist und eine Meßanordnung (9, 10) für den Strom oder das Ionisationspotential, dadurch gekennzeichnet, daß sie eine Anordnung (2, 3) aufweist zur Erzeugung eines magnetischen Ablenkungsfeldes (H, 4) des Weges der Sauerstoffmoleküle, wobei die Ionisationsanordnung (5, 6, 7, 8) im Wege der abgelenkten Sauerstoffmoleküle angeordnet ist.

2. Vorrichtung zur Messung nach Anspruch 1, dadurch gekennzeichnet, daß sie eine Anordnung zur periodischen Veränderung oder Unterbrechung des Magnetfeldes aufweist, das zwischen den Polen der Anordnung (2, 3) zur Erzeugung des Magnetfeldes herrscht.

3. Vorrichtung zur Messung nach Ansprüchen 1 oder 2, dadurch gekennzeichnet, daß sie ein Trennelement (5) zur Trennung der Gase in zwei Bereiche aufweist, wobei einer einen höheren Sauerstoffgehalt aufweist und der andere einen geringeren oder unveränderten Sauerstoffgehalt aufweist, mittels der Anordnung (2, 3), die das Magnetfeld erzeugt und eine Ionisationsanordnung (5—8) sowie eine Meßanordnung für einen Strom oder das Ionisationspotential der Gase in jedem der Bereiche.

### Claims

1. A device for measuring the oxygen content of combustion gas circulating in a zone, the said device comprising gas-ionization means and means of measuring the ionization current or potential, characterized by the fact that it comprises means of producing a magnetic field to deflect the path of the oxygen molecules, the said ionization means being positioned on the path of the deflected oxygen molecules.

2. A measuring device as defined in claim 1, characterized by the fact that it comprises means of periodical modification or interruption of the magnetic field existing between the poles of the means of producing the said magnetic field.

3. A measuring device as defined in claims 1 or 2, characterized by the fact that it comprises a component to separate the gas into two zones, one with a high oxygen content and the other with a low or unchanged oxygen content, obtained by the means of producing the magnetic field, and ionization means, together with means of measuring the gas-ionization current or potential in each such zone.